# EUROPÄISCHE PATENTSCHRIFT

(11) **EP 3 278 425 B1**
(45) Veröffentlichungstag und Bekanntmachung des Hinweises auf die Patenterteilung: **23.10.2019**
(21) Anmeldenummer: 16721066.5
(22) Anmeldetag: 23.03.2016
(51) Int. Cl.: H02K 29/08, H02K 11/215, H02K 7/00, H02K 15/12

(54) **MAGNETGEBER**
MAGNET SENSOR
CODEUR MAGNÉTIQUE

(30) Priorität: 02.04.2015 DE 102015206103
(43) Veröffentlichungstag der Anmeldung: 07.02.2018
(73) Patentinhaber: Bühler Motor GmbH, 90459 Nürnberg (DE)
(72) Erfinder: AHRENS, Matthias, 90455 Nürnberg (DE); BERNREUTHER, Georg, 90449 Nürnberg (DE); RICHTER, Olaf, 90547 Stein (DE); WALL, Andreas, 90453 Nürnberg (DE)
(86) Internationale Anmeldenummer: PCT/DE2016/200154
(87) Internationale Veröffentlichungsnummer: WO 2016/155732

(56) Entgegenhaltungen:
- EP-A1- 2 546 958
- EP-A2- 2 677 642
- DE-A1-102004 059 181
- KR-A- 20140 120 870
- US-A1- 2013 200 757

## Beschreibung

Die Erfindung betrifft einen Magnetgeber eines elektrischen Antriebs, welcher an einem Wellenende einer Welle montiert ist.

Magnetgeber dienen insbesondere zur Erfassung der Lage eines Permanentmagnetrotors eines elektronisch kommutierten Gleichstrommotors (BLDC-Motor). Die Erfassung der Rotorlage ist grundlegende Voraussetzung für eine sensorbezogene Kommutierung des BLDC-Motors. Wesentlich für eine optimale Kommutierung ist ein verdrehsicher befestigter Magnetgeber. Zur Sicherstellung einer Verdrehsicherheit ist es bekannt Magnetgeber formschlüssig mit der Welle zu verbinden. Dies erfordert einen nicht unerheblichen Aufwand für die Herstellung entsprechender Konturen an der Welle.

Zur Befestigung von Magnetgebern an Wellenenden sind diese häufig auch durch Kleben befestigt. Klebeverbindungen eignen sich jedoch nicht bei rauen Umgebungsbedingungen und in Umgebungen mit aggressiven Medien, wie bei Ölpumpenmotoren, welche in der Regel ölgefüllt sind.

Auch Kombinationen aus Formschluss- und Klebeverbindungen sind bekannt, mit entsprechend höherem Herstellungsaufwand.

Unter einem Magnetgeber ist insbesondere ein kleiner Permanentmagnet zu verstehen, welcher aus zumindest zwei Magnetpolen besteht, aber je nach Anwendung auch eine höhere Polpaarzahl aufweisen kann. Häufig ist der Magnetgeber zylinderförmig ausgebildet, wobei eine Hälfte den Nordpol und eine zweite Hälfte den Südpol bildet. Magnetisiert ist dieser Magnetgeber vorzugsweise axial, aber auch eine radiale Magnetisierung ist möglich.

Die nächstliegende US 2013/200757 A1 offenbart einen Magnetgeber eines elektrischen Antriebs, welcher an einem Wellenende einer Welle montiert ist, wobei der Magnetgeber durch Urformen eines Duroplastmaterials am Wellenende fixiert ist.

Aus der KR 2014 0120870 A ist ein Magnetgeber bekannt, der nach dem Aufsetzen auf das Wellenende mittels der Vergussmasse an der Welle fixiert wird.

Die DE 10 2004 059 181 A1 offenbart einen Magnetgeber, der beim Anbringen an das Wellenende mittels eines Klebstoffes an der Welle fixiert wird.

Aus der EP 2 546 958 A1 ist ein Magnetgeber bekannt, der beim Anbringen an das Wellenende mittels eines Klebstoffes an der Welle fixiert wird.

Die EP 2 677 642 A2 offenbart einen Magnetgeber, bei dem die Welle einen gerändelten Bereich aufweist, welcher mit Duroplastmaterial verbunden ist.

Aufgabe der Erfindung ist es ein Magnetgebermittel darzustellen, bei welchem eine möglichst einfache Verbindung zwischen einem Magnetgeber und einem Wellenende einer Welle herstellbar ist, wobei einfache Fertigungs- und Montageverfahren verwendbar und möglichst wenige Bauteile erforderlich sind. Weiter soll das Magnetgebermittel resistent gegenüber rauen Umgebungsbedingungen und hohen Temperaturschwankungen sein, sowie eine gute chemische Beständigkeit und Vibrationsfestigkeit aufweisen.

Diese Aufgabe wird erfindungsgemäß durch die Merkmale des Anspruchs 1 gelöst. Dadurch, dass der Magnetgeber durch Urformen eines Duroplastmaterials am Wellenende fixiert ist, ist eine besonders einfache und wirtschaftliche Möglichkeit geschaffen den Magnetgeber auf ein Standardteil zu befestigen. Duroplastmaterial hat die Eigenschaft atomare Verbindungen mit einem metallischen Grundwerkstoff einzugehen. Aus diesem Grund ist die mechanische Belastbarkeit dieser Verbindung besonders ausgeprägt. Der Bauteileaufwand kann je nach Ausführung äußerst gering sein. Erfindungsgemäß sind eine Stirnfläche des Magnetgebers und ein ringförmiger um die Kavität angeordneter Bereich des Wellenendes vom Duroplastmaterial axial bedeckt. Das Duroplastmaterial bildet hierbei im Grunde genommen einen Deckel, welcher die Kavität mit dem darin aufgenommenen Magnetgeber verschließt. Auch hier kann die Notwendigkeit gegeben sein einen Teil der Welle für ein Montagewerkzeug zugänglich zu halten, daher ist der ringförmige Bereich des Wellenendes auch nur teilweise vom Duroplastmaterial axial bedeckt.

Weiterbildungen der Erfindung werden in den Unteransprüchen näher dargestellt.

Es ist eine Vielzahl von Gestaltungs- und Anordnungsmöglichkeiten gegeben, z.B. kann das Duroplastmaterial axial unmittelbar an die Welle anschließen. Das gleiche gilt für den Magnetgeber selbst.

Um den Wirkungsgrad eines Sensormagnetkreises zu optimieren empfiehlt es sich den Magnetgeber durch einen von dem Duroplastmaterial eingenommenen Raumbereich vom Wellenende zu trennen. Hierdurch wird verhindert dass ein großer Teil des Magnetfeldes über die Welle geleitet wird.

Ein besonders großer Vorteil ist dadurch gegeben, dass die Welle zylindrisch sein kann, also ein Standardbauteil welches als Massenware erhältlich ist. Hierdurch ist eine hohe Wirtschaftlichkeit für das Gesamtsystem gegeben.

Es kann jedoch auch die Notwendigkeit erachtet werden das Wellenende mit einem durchmesserverringerten Absatz auszugestalten, insbesondere dann, wenn in diesem Bereich, zur Steigerung der mechanischen Festigkeit der Verbindung zwischen Welle und Magnetgeber, ein gerändelter Bereich vorgesehen wird. Eine Rändelung lässt sich auch auf die einfache zylindrische Welle aufbringen, jedoch würde der Magnetgeber bei einer Befestigung auf der Rändelung den Durchmesser in diesem Bereich erhöhen.

Es wird bevorzugt, dass der Magnetgeber im Wesentlichen zylindrisch ausgebildet ist, andere Geometrien sind jedoch auch einsetzbar und widersprechen dem Erfindungsgedanken nicht.

Der Wirkungsgrad des Sensormagnetkreises lässt sich weiter optimieren, indem der größte Teil einer axial vom Wellenende wegweisende Stirnfläche des Magnetgebers frei von Duroplastmaterial ist. Hierdurch ist der Luftspalt zwischen Magnetgeber und Sensor sehr gering, die Signalamplitude groß und Signalqualität besonders gut.

Soll der Magnetgeber in besonderer Weise von Umgebungseinflüssen geschützt sein, ist es ggf. notwendig auch die axiale Stirnfläche des Magnetgebers durch das Duroplastmaterial zu bedecken. Die Wandstärke des Duroplastmaterials kann jedoch sehr gering gehalten werden.

In der Regel wird der Magnetgeber radial vom Duroplastmaterial umgeben sein, dies erhöht die Festigkeit der Verbindung zwischen Magnetgeber und Welle.

Soll die Welle axial zugänglich sein, z.B. durch ein Montagewerkzeug, kann die Außenkontur des den Magnetgeber radial umgebende Duroplastmaterials im Wesentlichen zylindrisch sein und einen geringeren Durchmesser aufweisen als die Welle.

Gemäß der Erfindung weist das Wellenende eine axial offene im Wesentlichen zylinderförmige Kavität auf, in welcher der Magnetgeber aufgenommen ist. Diese Lösung bietet einen besonderen Schutz des Magnetgebers gegenüber Umgebungseinflüssen.

Die Kavität kann so bemessen sein, dass der Magnetgeber mit seiner vollen axialen Länge in der Kavität aufgenommen ist. Dies erleichtert die Anspritzung des durch das Duroplastmaterial gebildeten Deckels.

Eine besonders bevorzugte und vorteilhafte weitere Ausführungsform besteht darin, dass der Magnetgeber aus einem kunststoffgebunden Magnetmaterial besteht. Es ist also keine Montage eines Magnetgebers erforderlich, sondern der Magnetgeber wird mit seiner Herstellung in einem Arbeitsgang an das Wellenende gefügt. Ein weiterer Vorteil dieser Lösung besteht darin, dass die Duroplastfläche am Wellenende größer ist als bei einem Umspritzen eines Magnetgebers aus einem nicht spritzbaren Magnetmaterial.

Bei besonders hoher mechanischer Beanspruchung mag es notwendig sein, dass der Magnetgeber und die Welle Geometrien aufweisen durch welche Magnetgeber und Welle eine verdrehsichere Verbindung eingehen. In der Regel dürfte dies jedoch nicht erforderlich sein.

Ausführungen von Beispielen und der Erfindung werden nachfolgend anhand der Zeichnung näher erläutert. Es zeigen:
Fig. 1 eine erste Ausführung eines Beispiels,
Fig. 2 eine erste Variante der ersten Ausführung,
Fig. 3 eine zweite Variante der ersten Ausführung,
Fig. 4 eine dritte Variante der ersten Ausführung,
Fig. 5 eine zweite Ausführung eines Beispiels,
Fig. 6 eine Welle für die erfindungsgemäße Ausführungsform,
Fig. 7 eine dritte Ausführung eines Beispiels und
Fig. 8 eine erfindungsgemäße Ausführungsform.

Hinweis: Bezugszeichen mit Index (a, b, c...) und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

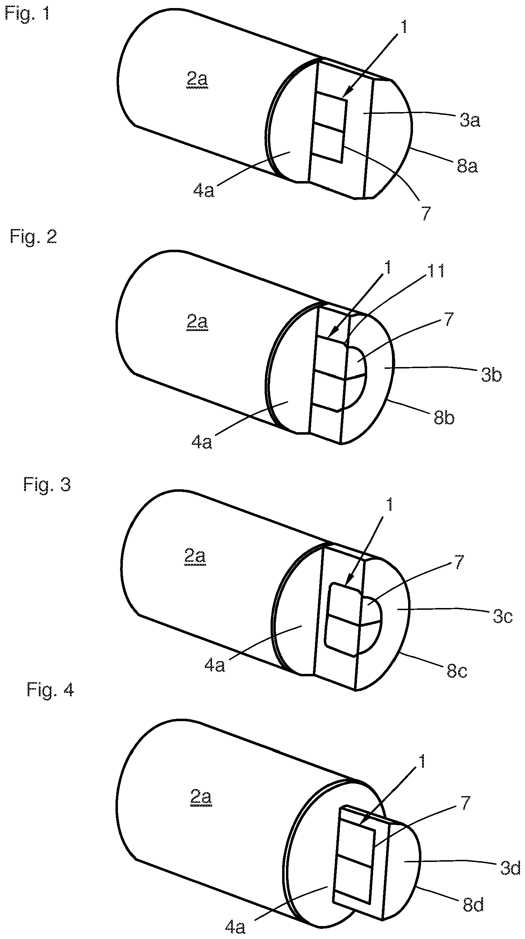

Fig. 1 zeigt eine erste Ausführungsform eines Beispiels, mit einer ersten Ausführungsform einer Welle 2a, welche hier standardisiert zylindrisch ausgebildet ist und mit einem Magnetgeber 1, welcher eine zylindrische Grundform aufweist und mit einer seiner Stirnseiten unmittelbar an ein Wellenende 4a anschließt. Der Magnetgeber ist zweipolig ausgeführt und weist daher einen Nord- und einen Südpol auf und er ist axial magnetisiert. Radial und auf einer Stirnfläche 7 axial ist der Magnetgeber 1 von einem Duroplastmaterial umgeben, welches die Verbindung zur Welle 2a herstellt. Das Duroplastmaterial ist unmittelbar auf das Wellenende 4a aufgespritzt, wobei der Magnetgeber als Einlegeteil in einer Spritzgussmaschine mitgefügt ist. Die Außenkontur 8a des Duroplastmaterials 3a ist zylindrisch geformt und orientiert sich an der Kontur der Welle 2a.

Die gezeigten Darstellungen der Figuren 1 bis 5, 7 und 8 sind Teilschnitte, wobei die Welle ungeschnitten bleibt.

Fig. 2 zeigt eine erste Variante des ersten Beispiels, mit der Welle 2a, dem Magnetgeber 1 und dem Duroplastmaterial 3b mit seiner zylindermantelförmigen Außenkontur 8b. Im Unterschied zu Fig. 1 ist hier der Magnetgeber 1, insbesondere seine der Welle abgewandte Stirnfläche 7 axial nicht mit Duroplastmaterial 3b bedeckt. Das Duroplastmaterial 3b hintergreift lediglich eine in der Regel vorhandene Fase 11 und umfasst den Magnetgeber ansonsten nur radial. Axial ist das Duroplastmaterial mit dem Wellenende 4a verbunden, an welchem auch der Magnetgeber 1 anschließt.

Fig. 3 zeigt eine zweite Variante des ersten Beispiels, mit der Welle 2a, dem Magnetgeber 1 und dem Duroplastmaterial 3c mit seiner zylindermantelförmigen Außenkontur 8c. Im Unterschied zu Fig. 2 schließt hier der Magnetgeber 1 nicht unmittelbar an das Wellenende 4a an, sondern ist an der der Welle 2a zugewandten Stirnfläche vom Duroplastmaterial 3c umgeben. Hierdurch ist ein Abstand des Magnetgebers 1 von der Welle 2a hergestellt. Die von der Welle 2a abgewandte Stirnfläche 7 des Magnetgebers ist auch hier nicht vom Duroplastmaterial 3c bedeckt.

Fig. 4 zeigt eine dritte Variante des ersten Beispiels, welche im Wesentlichen an Fig. 1 angelehnt ist, mit der Welle 2a, dem Magnetgeber 1, dem Wellenende 4a, dem Duroplastmaterial 3d, dessen zylindermantelförmige Außenkontur 8d einen gegenüber der Welle verringerten Außendurchmesser aufweist. Hierdurch ist ein Teil des Wellenendes 4a frei zugänglich für Montagewerkzeuge. Hierdurch ist die Materialstärke des Duroplastmaterials 3d um den Magnetgeber herum geringer. Die der Welle 2a abgewandte Stirnseite 7 des Magnetgebers ist hier wie bei Fig. 1 vom Duroplastmaterial 3d bedeckt.

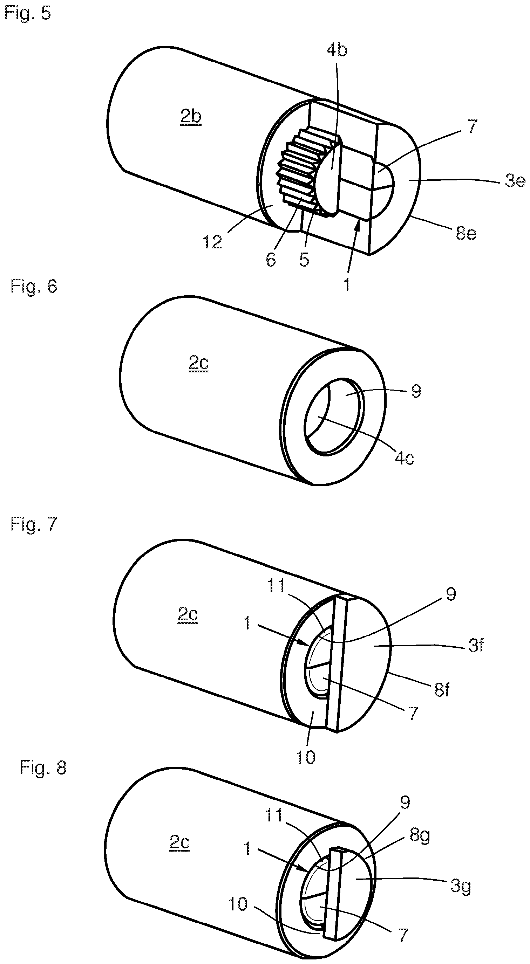

Fig. 5 zeigt eine zweite Ausführungsform eines Beispiels, mit einer zweiten Ausführungsform der Welle 2b, welche einen durchmesserverringerten Absatz 5 aufweist, welcher einen gerändelten zylindermantelförmigen Bereich 6 aufweist. Das Wellenende 4b wird hier durch das Ende des durchmesserverringerten Absatzes 5 gebildet. An dieses Wellenende 4b schließt unmittelbar der Magnetgeber 1 an, welcher an seiner der Welle abgewandten Stirnfläche 7 nicht mit Duroplastmaterial 3e bedeckt ist. Radial weist das Duroplastmaterial 3e eine zylindermantelförmige Außenkontur 8e auf und umfasst zum einen den Magnetgeber 1 und zum anderen den gerändelten Bereich 6 um den Absatz 5, bis zu einer den Absatz 5 begrenzenden Ringfläche 12 der Welle 2b.

Fig. 6 stellt eine Welle 2c dar, welche für eine erfindungsgemäße Ausführungsform vorgesehen ist.

Das Wellenende 4c wird partiell durch das axiale Ende einer zylinderförmigen Kavität 9 gebildet.

Fig. 7 zeigt die dritte Ausführungsform eines Beispiels, mit der Welle 2c, dem Magnetgeber 1, dem Duroplastmaterial 3f, das hier in Form einer Scheibe mit zylindermantelförmiger Außenkontur 8f ausgebildet ist und einen ringförmigen Bereich 10 der Welle 2c, sowie die der Welle abgewandte Stirnfläche 7 des Magnetgebers bedeckt und mit beiden eine innige Verbindung eingeht.

Fig. 8 zeigt eine erfindungsgemäße Ausführungsform, mit der Welle 2c, dem Magnetgeber 1, dem ringförmigen Bereich 10, dem Duroplastmaterial 3g, welches auch hier in Form einer Scheibe mit zylindermantelförmgier Außenkontur 8g ausgebildet ist, wobei der Durchmesser der Scheibe deutlich geringer ist als in Fig. 7. Diese Maßnahme dient ähnlich wie in Fig. 4 dazu einen Freiraum für ein Montagewerkzeug bereitzustellen. In den Fig. 7 und 8 ist weiter eine Fase 11 des Magnetgebers 1 zu erkennen.

Als zusätzliche hier nicht dargestellte Variante ist auch denkbar den Magnetgeber geringfügig aus der Kavität vorspringen zu lassen und das den Magnetgeber nur im Bereich seiner Fase vom Duroplastmaterial bedecken zu lassen, so dass die Stirnfläche des Magnetgebers frei einem Sensor gegenüberstehen kann.

### Bezugszeichenliste

- 1: Magnetgeber
- 2: Welle
- 3: Duroplastmaterial
- 4: Wellenende
- 5: Absatz
- 6: gerändelter Bereich
- 7: Stirnfläche
- 8: Außenkontur
- 9: Kavität
- 10: ringförmiger Bereich
- 11: Fase
- 12: Ringfläche

## Patentansprüche

1. Magnetgeber (1) eines elektrischen Antriebs, welcher an einem Wellenende (4) einer Welle (2) montiert ist, wobei der Magnetgeber (1) durch Urformen eines Duroplastmaterials (3) am Wellenende (4) fixiert ist, **dadurch gekennzeichnet, dass** ein Teilbereich des Wellenendes (4) eine axial offene im Wesentlichen zylinderförmige Kavität (9) ist, in welcher der Magnetgeber (1) aufgenommen ist, dass eine Stirnfläche des Magnetgebers (1) und ein weiterer Teilbereich des Wellenendes in Form eines ringförmigen um die Kavität (9) angeordneten Bereichs (10) vom Duroplastmaterial (3) axial bedeckt ist und dass der ringförmige Bereich (10) des Wellenendes nur teilweise vom Duroplastmaterial (3) axial bedeckt ist.

2. Magnetgeber nach Anspruch 1, **dadurch gekennzeichnet, dass** das Duroplastmaterial (3) axial unmittelbar an die Welle (2) anschließt.

3. Magnetgeber nach Anspruch 1 oder 2, **dadurch gekennzeichnet, dass** der Magnetgeber (1) unmittelbar an die Welle (2) anschließt.

4. Magnetgeber nach Anspruch 1 oder 2, **dadurch gekennzeichnet, dass** der Magnetgeber durch einen von dem Duroplastmaterial (3) eingenommenen Raumbereich vom Wellenende (4) getrennt ist.

5. Magnetgeber nach Anspruch 1, 2, 3 oder 4, **dadurch gekennzeichnet, dass** die Welle (2) zylindrisch ist.

6. Magnetgeber nach Anspruch 1, 2, 3 oder 4, **dadurch gekennzeichnet, dass** die Welle (2) einen durchmesserverringerten Absatz (5) aufweist.

7. Magnetgeber nach zumindest einem der vorangehenden Ansprüche, insbesondere nach Anspruch 6, **dadurch gekennzeichnet, dass** die Welle (2) einen gerändelten Bereich (6) aufweist.

8. Magnetgeber nach Anspruch 7, **dadurch gekennzeichnet, dass** das Duroplastmaterial (3) mit dem gerändelten Bereich (6) verbunden ist.

9. Magnetgeber nach zumindest einem der vorangehenden Ansprüche, **dadurch gekennzeichnet, dass** der Magnetgeber (1) im Wesentlichen zylindrisch ausgebildet ist.

10. Magnetgeber nach zumindest einem der vorangehenden Ansprüche, **dadurch gekennzeichnet, dass** der größte Teil einer axial vom Wellenende (4) wegweisende Stirnfläche (7) des Magnetgebers frei von Duroplastmaterial ist.

11. Magnetgeber nach zumindest einem der Ansprüche 1 bis 9, **dadurch gekennzeichnet, dass** die vom Wellenende (4) wegweisende Stirnfläche des Magnetgebers von Duroplastmaterial (3) bedeckt ist.

12. Magnetgeber nach zumindest einem der vorangehenden Ansprüche, **dadurch gekennzeichnet, dass** der Magnetgeber (1) radial vom Duroplastmaterial (3) bedeckt ist.

13. Magnetgeber nach Anspruch 12, **dadurch gekennzeichnet, dass** eine Außenkontur (8) des den Magnetgeber radial umgebende Duroplastmaterials (3) im Wesentlichen zylindrisch ist und einen geringeren Durchmesser aufweist als die Welle (2).

14. Magnetgeber nach Anspruch 1 oder 14, **dadurch gekennzeichnet, dass** der Magnetgeber (1) mit seiner vollen axialen Länge in der Kavität (9) aufgenommen ist.

15. Magnetgeber nach zumindest einem der vorangehenden Ansprüche, **dadurch gekennzeichnet, dass** der Magnetgeber aus einem kunststoffgebunden Magnetmaterial besteht.

16. Magnetgeber nach Anspruch 16, **dadurch gekennzeichnet, dass** er aus einem duroplastgebundenen Magnetwerkstoff besteht, wobei Magnetmaterial in Form von Granulat und/oder Pulver dem spritzbaren Duroplastwerkstoff zugesetzt ist.

17. Magnetgeber nach zumindest einem der vorangehenden Ansprüche, **dadurch gekennzeichnet, dass** der Magnetgeber und die Welle Geometrien aufweisen durch welche Magnetgeber und Welle eine verdrehsichere Verbindung eingehen.

## Claims

1. A magnet sensor (1) of an electric drive, said means being mounted on a shaft end (4) of a shaft (2), wherein the magnet sensor (1) is fixed on the shaft end (4) by primary shaping of a thermosetting plastic material (3), **characterized in that** a partial region of the shaft end (4) is an axially-open, substantially cylinder-shaped cavity (9) in which the magnet sensor (1) is received, **in that** an end face of the magnet sensor (1) and a further partial region of the shaft end in the form of an annular region (10), arranged around the cavity (9), is axially covered by the thermosetting plastic material (3), and **in that** the annular region (10) of the shaft end is only partially axially covered by the thermosetting plastic material (3).

2. A magnet sensor according to claim 1, **characterized in that** the thermosetting plastic material (3) directly adjoins the shaft (2) axially.

3. A magnet sensor according to claim 1 or 2, **characterized in that** the magnet sensor (1) directly adjoins the shaft (2).

4. A magnet sensor according to claim 1 or 2, **characterized in that** the magnet sensor is separated from the shaft end (4) by a spatial region occupied by the thermosetting plastic material (3).

5. A magnet sensor according to claim 1, 2, 3 or 4, **characterized in that** the shaft (2) is cylindrical.

6. A magnet sensor according to claim 1, 2, 3 or 4, **characterized in that** the shaft (2) has an offset (5) of reduced diameter.

7. A magnet sensor according to at least one of the preceding claims, in particular according to claim 6, **characterized in that** the shaft (2) has a knurled region (6).

8. A magnet sensor according to claim 7, **characterized in that** the thermosetting plastic material (3) is connected to the knurled region (6).

9. A magnet sensor according to at least one of the preceding claims, **characterized in that** the magnet sensor (1) is substantially cylindrical.

10. A magnet sensor according to at least one of the preceding claims, **characterized in that** the majority of an end face (7), axially directed away from the shaft end (4), of the magnet sensor is free from thermosetting plastic material.

11. A magnet sensor according to at least one of claims 1 to 9, **characterized in that** the end face, directed away from the shaft end (4), of the magnet sensor is covered by thermosetting plastic material (3).

12. A magnet sensor according to at least one of the preceding claims, **characterized in that** the magnet sensor (1) is covered radially by the thermosetting plastic material (3).

13. A magnet sensor according to claim 12, **characterized in that** an external contour (8) of the thermosetting plastic material (3) radially surrounding the magnet sensor is substantially cylindrical and has a smaller diameter than the shaft (2).

14. A magnet sensor according to claim 1 or 14, **characterized in that** the entire axial length of the magnet sensor (1) is received in the cavity (9).

15. A magnet sensor according to at least one of the preceding claims, **characterized in that** the magnet sensor is composed of a plastic-bonded magnet material.

16. A magnet sensor according to claim 16, **characterized in that** it is composed of a thermosetting-plastic-bonded magnet material, wherein magnet material in the form of a granulate material and/or powder is added to the extrudable thermosetting plastic material.

17. A magnet sensor according to at least one of the preceding claims, **characterized in that** the magnet sensor and the shaft have geometries by means of which magnet sensor and shaft establish an anti-twist connection.

## Revendications

1. Codeur magnétique (1) d'un entrainement électrique, qui est monté à une extrémité d'arbre (4) d'un arbre (2), le codeur magnétique (1) étant fixé par moulage initial d'un matériau thermodurcissable (3) à l'extrémité d'arbre (4),
**caractérisé en ce qu'**une zone partielle de l'extrémité d'arbre (4) est une cavité (9) ouverte axialement et sensiblement de forme cylindrique, dans laquelle est reçu le codeur magnétique (1), **en ce qu'**une surface frontale du codeur magnétique (1) et une autre zone partielle de l'extrémité d'arbre sous la forme d'une zone annulaire (10) agencée autour de la cavité (9), sont recouvertes axialement par le matériau thermodurcissable (3), et **en ce que** la zone annulaire (10) de l'extrémité d'arbre n'est recouverte axialement par le matériau thermodurcissable (3), que de manière partielle.

2. Codeur magnétique selon la revendication 1, **caractérisé en ce que** le matériau thermodurcissable (3) se raccorde axialement directement à l'arbre (2).

3. Codeur magnétique selon la revendication 1 ou la revendication 2, **caractérisé en ce que** le codeur magnétique (1) se raccorde directement à l'arbre (2).

4. Codeur magnétique selon la revendication 1 ou la revendication 2, **caractérisé en ce que** codeur magnétique est séparé de l'extrémité d'arbre (4) par une zone spatiale occupée par le matériau thermodurcissable (3).

5. Codeur magnétique selon la revendication 1, 2, 3 ou la revendication 4, **caractérisé en ce que** l'arbre (2) est cylindrique.

6. Codeur magnétique selon la revendication 1, 2, 3 ou la revendication 4, **caractérisé en ce que** l'arbre (2) présente un décrochement (5) réduisant son diamètre.

7. Codeur magnétique selon l'une au moins des revendications précédentes, notamment selon la revendication 6, **caractérisé en ce que** l'arbre (2) présente une zone moletée (6).

8. Codeur magnétique selon la revendication 7, **caractérisé en ce que** le matériau thermodurcissable (3) est relié à la zone moletée (6).

9. Codeur magnétique selon l'une au moins des revendications précédentes, **caractérisé en ce que** le codeur magnétique (1) est d'une configuration sensiblement cylindrique.

10. Codeur magnétique selon l'une au moins des revendications précédentes, **caractérisé en ce que** la plus grande partie d'une surface frontale (7) du codeur magnétique, qui est orientée dans la direction axiale s'éloignant de l'extrémité d'arbre (4), est libre de matériau thermodurcissable.

11. Codeur magnétique selon l'une au moins des revendications 1 à 9, **caractérisé en ce que** la surface frontale du codeur magnétique, qui est orientée dans la direction s'éloignant de l'extrémité d'arbre (4), est recouverte par du matériau thermodurcissable (3).

12. Codeur magnétique selon l'une au moins des revendications précédentes, **caractérisé en ce que** le codeur magnétique (1) est recouvert radialement par le matériau thermodurcissable (3).

13. Codeur magnétique selon la revendication 12, **caractérisé en ce qu'**un contour extérieur (8) du matériau thermodurcissable (3) entourant radialement le codeur magnétique, est sensiblement cylindrique et présente un diamètre plus faible que celui de l'arbre (2).

14. Codeur magnétique selon la revendication 1 ou la revendication 14, **caractérisé en ce que** codeur magnétique (1) est logé sur la totalité de sa longueur axiale dans la cavité (9).

15. Codeur magnétique selon l'une au moins des revendications précédentes, **caractérisé en ce que** le codeur magnétique est constitué d'un matériau magnétique à liant synthétique.

16. Codeur magnétique selon la revendication 16, **caractérisé en ce qu'**il est constitué d'un matériau magnétique à liant thermodurcissable, du matériau magnétique sous forme de granules et/ou de poudre étant additionné au matériau thermodurcissable pouvant être moulé par injection.

17. Codeur magnétique selon l'une au moins des revendications précédentes, **caractérisé en ce que** le codeur magnétique et l'arbre présentent des géométries, grâce auxquelles le codeur magnétique et l'arbre forment une liaison fixe de rotation.
